# EUROPEAN PATENT SPECIFICATION

(11) **EP 1 289 863 B1**
(45) Date of publication and mention of the grant of the patent: **28.07.2004**
(21) Application number: 01936673.1
(22) Date of filing: 08.06.2001
(51) Int. Cl.: B65G 45/22

(54) **A CLEANING SYSTEM FOR A PARTICULATE MATERIAL CONVEYOR**
REINIGUNGSSYSTEM FÜR EINEN FEINGUTFÖRDERER
SYSTEME DE NETTOYAGE POUR CONVOYEUR DE MATERIAU PARTICULAIRE

(30) Priority: 15.06.2000 GB 0014575
(43) Date of publication of application: 12.03.2003
(73) Proprietor: Entecon UK Limited, Blackwater, Camberley, Surrey GU17 9AP (GB); Van Dijk International Holdings BV, NL-8263 BC Kampen (NL)
(72) Inventor: BLUE, Andrew John, Reading Berkshire RG5 4UW (GB)
(74) Representative: Townsend, Victoria Jayne
(86) International application number: PCT/GB2001/002528
(87) International publication number: WO 2001/096217

(56) References cited:
- GB-A- 2 326 144
- US-A- 6 035 872

## Description

This invention relates to a cleaning system for a particulate material conveyor system.

Conveyor systems for the conveyance of particulate materials are known. Examples of such conveyors include those known as slow speed drag conveyors and aero mechanical conveyors. These conveyors typically comprise a continuous tubular assembly through which the particulate material is conveyed by a plurality of spaced apart discs. The discs are mounted on an endless rope which is driven between terminal sprockets through the tubular assembly. The disc peripheries are spaced from the internal surfaces of the tubular conveyor and their movement through the tubular assembly effectively fluidises the particulate material causing it to flow between loading and discharge stations positioned along the tubular assembly.

One such tubular conveyor is disclosed in our published British Patent Application no. GB 2 326 144 A, the details of which are incorporated herein by reference. These conveyors operate at relatively slow speeds and effectively drag particulate material along the conveying tubes to a selected outlet valve. Throughputs of the order of between 8 and 32 m³ per hour are typical. The tubes of the conveyor may be aligned horizontally, vertically or may be inclined.

Products commonly handled by such conveyors include coffee, tea, sugar, detergents, flour, seeds, granules, gypsum, polymer powders and resins and the conveyors are used extensively in the food, pharmaceutical and chemical industries. In these industries, the purity of the products being processed is often of the utmost importance, hence the conveyor must be thoroughly cleaned between batches.

As particulate material passes through the conveyor, some falls under gravity into areas where it can not easily be agitated or fluidised by the discs. For example, material may congregate to the bottom of the sprocket housing. Various methods of cleaning in these problem areas are known, for example, the sprocket covers may be removed and their peripheries manual cleaned. Alternatively, cleaning fluids may be flushed though the system between product runs. Each of these methods is time consuming and adds significant cost to a production run, so recent developments have concentrated on methods which can be more easily implemented and even automated.

One example of such a method has been the provision of compressed air at various points around the sprocket housing. The compressed air inlets are specifically directed at the problem areas where the particulate material congregates. The turbulence caused by the compressed air lifts the particulate material which can then be carried away by the discs. Whilst this method is efficient and easy to use, it has been found that, unless a considerable number of inlets are provided for the compressed air about the sprocket housing, the cleaning effect is quite localised. Thus, where the particulate material is particularly dense and difficult to agitate, some areas retain a quantity of material even after cleaning by this compressed air method.

The present invention aims to provide an improved cleaning system for a particulate material conveyor which alleviates some of the problems encountered with existing systems.

In accordance with the present invention, there is provided a cleaning system for a particulate material conveyor comprising;
a sprocket having one or more radial channels passing therethrough, the radial channel(s) connecting with an inlet for a cleaning fluid supply and each having one or more fluid outlets exiting from the surface of the sprocket, such that when the sprocket rotates, fluid provided through the inlet is distributed through the radial channels and out of the fluid outlets and is dispersed in a turbulent manner about the cavity surrounding the sprocket.

Conveniently, the cleaning fluid may be provided through a rotary union which can be fitted via a bore to the centre of the sprocket and rotate therewith. Conveniently the cleaning fluid is compressed air.

Preferably, the sprocket has a centrally arranged spider, each leg of the spider being provided with a radial channel. Each radially channelled leg is preferably provided with a multitude of fluid outlets equi-spaced along the spider leg and directed outwards from the front and/or rear circular plane of the sprocket. Also, preferably, at least one fluid outlet from each radial channel exits to the peripheral edge of the sprocket, most preferably, there are at least two such outlets each directed at an angle to the axis of the radial channel and each being directed in symmetrically opposing directions. Optionally, four such outlets may be provided directed in four symmetrically opposing directions so as to reach a maximum area with the cleaning fluid.

The sprocket is preferably provided from a single blank of metal. Conveniently, the sprocket may be water cut from the blank and the radial channels and fluid inlet and outlets drilled. The termini of the radial channels at the peripheral edge of the sprocket may be plugged.

The fluid outlets will preferably be of smaller diameter than the radial channels thereby providing increased pressure at the outlets for cleaning. Suitable diameters for the radial channel and fluid outlets on a sprocket of the type normally used in aero mechanical conveyors are 4.5mm for the radial channel and 1.5 mm for the outlets. The radial channel and/or the fluid outlets may optionally be varied in diameter so as to provide increased/decreased pressure of the fluid as desired at various positions in the sprocket.

In another aspect, the invention provides a method for cleaning a particulate material conveyor comprising;
providing a source of cleaning fluid through a system of fluid conduits exiting inside the conveyor, and
causing the system of fluid conduits to move with the rotation of the sprocket about the sprocket area so as to distribute the fluid over a greater range of area withing the cavity surrounding the sprocket.

In a further aspect, the invention provides a particulate material conveyor comprising;
a continuous tubular assembly through which the particulate material is conveyed via a plurality of spaced apart discs, said discs being mounted on an endless rope which is driven between terminal sprockets through the tubular assembly wherein one or more of the sprockets has one or more radial channels passing therethrough, the radial channel(s) connecting with an inlet for a cleaning fluid supply and each having one or more fluid outlets exiting from the surface of the sprocket, such that when the sprocket rotates, fluid provided through the inlet is distributed through the radial channels and out of the fluid outlets and is dispersed in a turbulent manner about the cavity surrounding the sprocket by the rotation of the sprocket.

The conveyor may further comprise one or more fluid inlets entering through the sprocket cover as described in relation to the prior art, to provide additional cleaning in the main problem areas.

The invention will now be further described by way of example with reference to the following figures, in which;

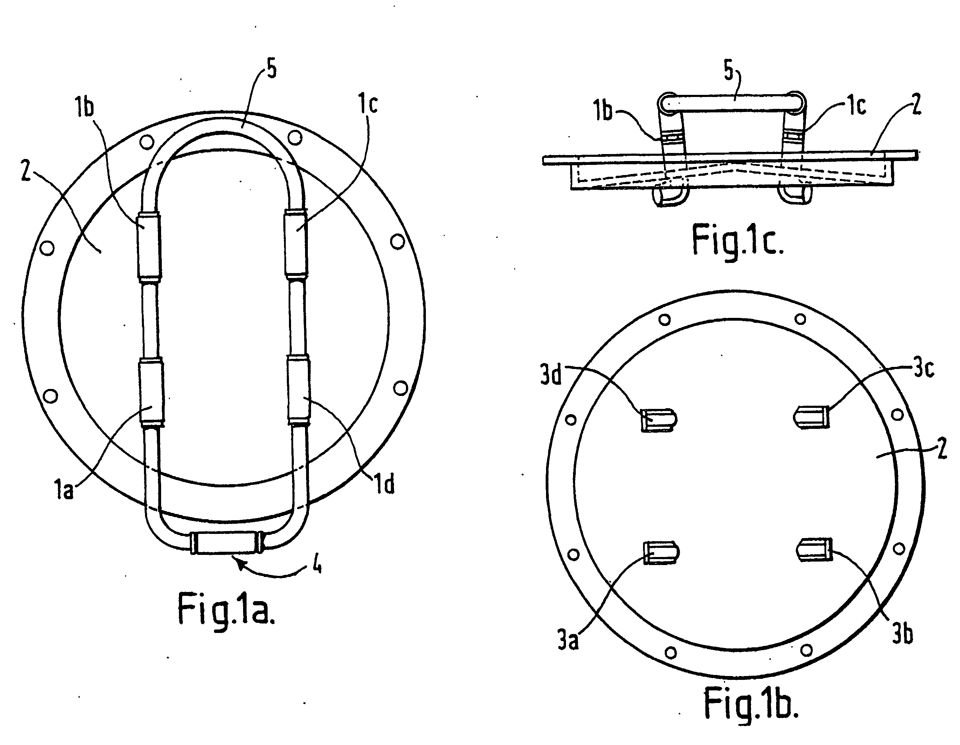

Figure 1 shows a cleaning apparatus as used in prior art conveyor systems; Figure 1(a) shows a front view of a bearing housing or a cover plate carrying a cleaning apparatus; Figure 1(b) shows the coverplate with the cleaning apparatus remeved; Figure 1(c) shows a side view of the apparatus shown in Figure 1(a);
Figure 2 shows a plan view of a sprocket of a cleaning system according to one embodiment of the present invention;
Figure 3 shows a side view of a sprocket of a cleaning system according to the embodiment of Figure 2;
Figure 4 shows a cut away section of a rotary union suitable for use in supplying cleaning fluid in the embodiment of Figures 2 and 3.
Figure 5 shows a view of a additional cleaning apparatus which may be incorporated with the cleaning apparatus as illustrated in Figures 2 to 4

As can be seen from the figures, the prior art apparatus comprises four air tight fluid inlet conduits 1a, 1b, 1c, 1d mounted in a fixed position on a bearing housing or a cover plate 2 which encloses a sprocket (not shown) of an aeromechanical conveyor. The inlet conduits 1a, 1b, 1c, 1d are connected via fluid tight seals through four equi-spaced apertures 3a, 3b, 3c, 3d provided in the cover plate. Each aperture is spaced approximately centrally of one symmetrical quarter of the cover plate. The inlet conduits 1a, 1b, 1c, 1d are interconnected by conduit 5. The conduits 1a, 1b, 1c, 1d and 5 all connect with a supply of compressed air via conduit 4.

Between runs on the apparatus, the compressed air supply received through the conduit 4 is directed via inlet conduits 1a, 1b, 1c, 1d to blast at high pressure any particulate material which has, during the run, congregated between the spider legs of the sprocket or in the cavity surrounding the sprocket. In use, the sprocket is caused to rotate and this additional turbulence will assist in removing particulate material blasted up by the compressed air from the cavity surrounding the sprocket and transport it via the discs (not shown) to a discharge station (not shown). It will be appreciated that in this prior art embodiment, the fluid inlets 1a, 1b, 1c, 1d to the cavity surrounding the sprocket remain stationary and are each directed only at a small area within the cavity.

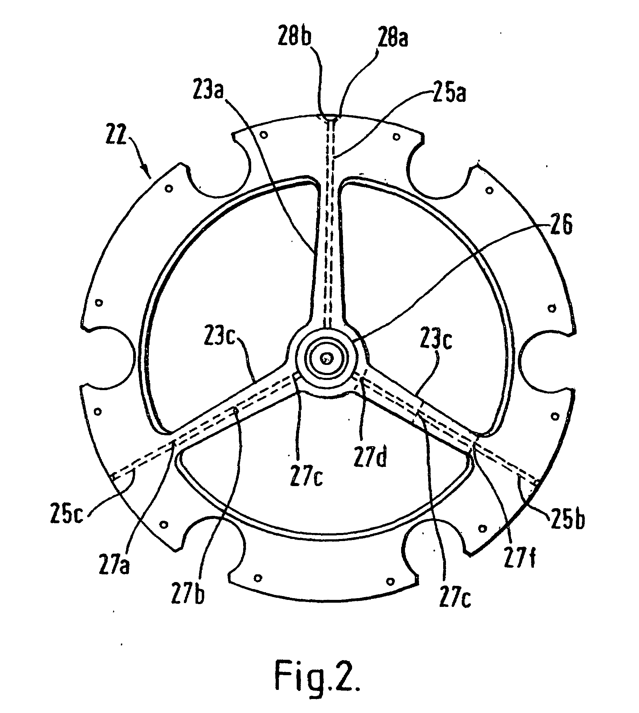

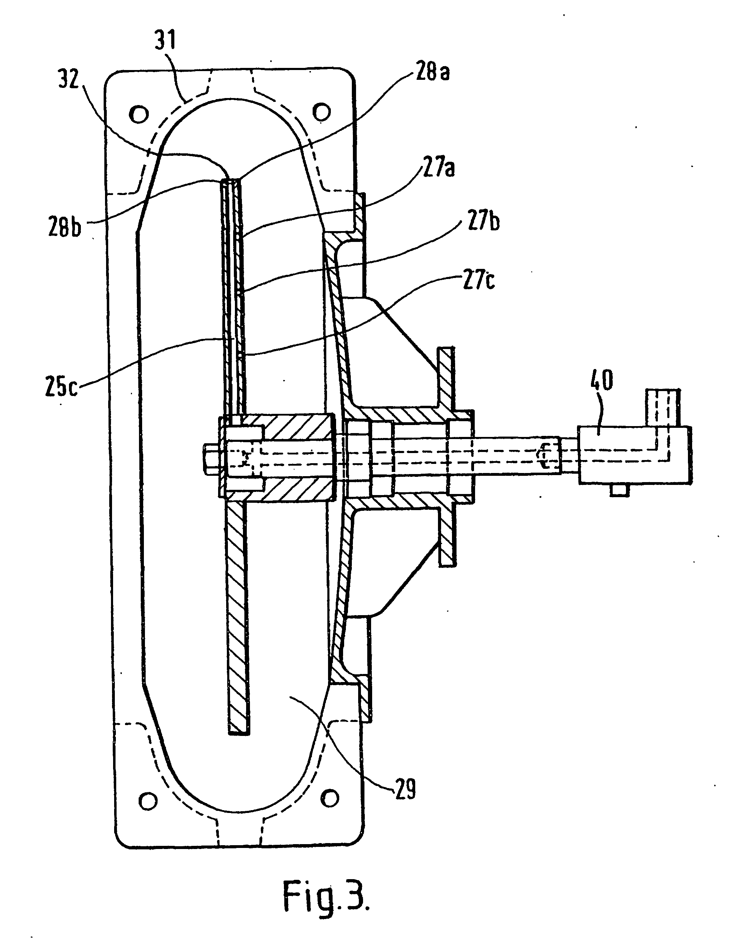

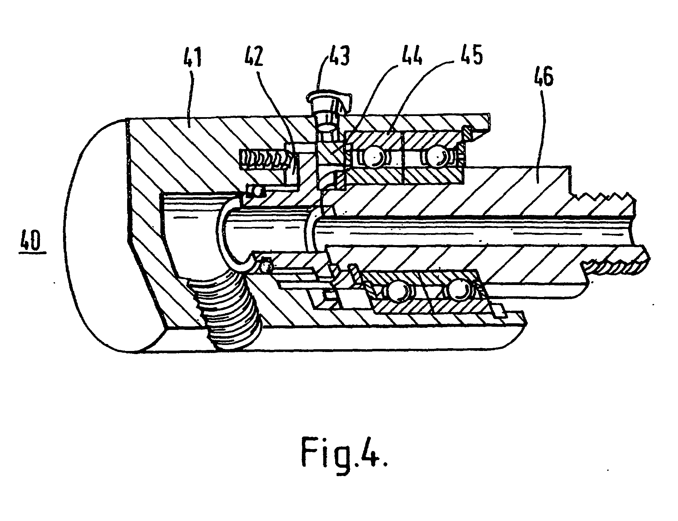

Figures 2 and 3 illustrate a sprocket 22 forming part of a cleaning apparatus according to the present invention. The sprocket generally designated 22, is formed from a single piece of durable and inert metal such as mild steel or stainless steel. The central portion of the sprocket 22 forms a spider 23 which has three legs 23a, 23b, 23c extending radially across the generally circular face of the sprocket 22. Each leg of the spider is positioned at an angle of about 120 degrees from the other two. Through the centre of each spider leg 23a, 23b, 23c is provided a channel 25a, 25b, 25c. Each channel extends from adjacent the periphery of the sprocket 22 to bore 26 having an axis substantially perpendicular to those of the radial channels 25a, 25b and 25c and positioned centrally of the spider 23 of the sprocket 22. The bore 26 is closed at one end and at the other forms an inlet for a rotary air fitting 40 which is further described with reference to Figure 4.

Spaced equi-distantly along each leg 23a, 23b, 23c of the spider are small fluid outlet holes 27a, 27b, 27c,..... The holes open to the surface of the sprocket 22 and each join with channels 25a, 25b, 25c providing a continuous system of channels for carrying a supply of compressed air (not shown) through the spider legs 23a, 23b, 23c and out into the enclosed cavity 29 which surrounds the sprocket 22 within an aero-mechanical conveyor system.

The end of each radial channel 25a, 25b, 25c at the peripheral edge of the sprocket is closed with a plug 32. At the end of each radial channel 25a, 25b, 25c to the peripheral edge of the sprocket 22 are provided two additional fluid outlet holes 28a, 28b,..... Each pair are positioned with their axes at about 90 degrees to each other and about 45 degrees from the axis of the associated radial channel 25a, 25b, 25c. These channels are directed generally towards the arced inner surface of the housing 31 surrounding the sprocket 22.

The rotary air fitting 40 is received in the bore 26 and the join is made airtight by ring seals (not shown). In use, compressed air from a source (not shown) is supplied via a conduit to the rotary air fitting 40. The air passes via the bore 26 into radial channels 25a, 25b, 25c. From there it passes under high pressure through each of the outlets 27a, 27b, 27c, ..... and 28a, 28b, 28c,..... The sprocket 22 is rotated during the cleaning operation so as to provide a continuously moving, toroidal pattern of compressed air within the cavity 29.

Figure 4 illustrates a rotary air fitting 40 of the PN type provided by Filton™ components. The fitting generally comprises a body 41, mechanical seal assembly 42, seal face lubricator 43, an oil reservoir 44, ball bearing 45 and rotary spindle 46. The fitting is designed for use in rotary shaft. In the embodiments of the invention described with reference to Figures 2 and 3, the rotary spindle 46 is carried by the centre of the spider 23 which is driven to rotate by a motor (not shown). The rotary spindle rotates with the spider 23 allowing compressed air to be provided via a fixed housing in the body 41 of the rotary fitting 40.

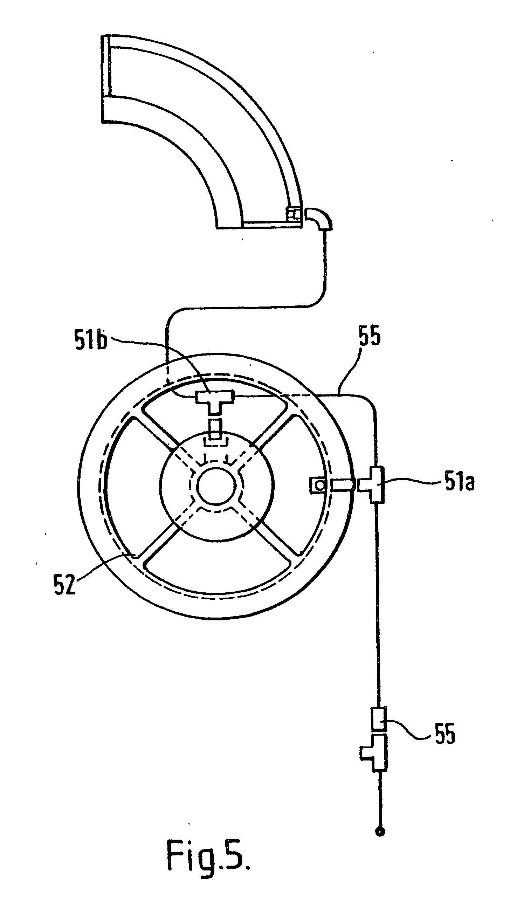

In Figure 5 the additional apparatus comprises two air tight fluid inlet conduits 51a, 51b mounted in a fixed position on a bearing housing or a cover plate 52 which encloses a sprocket (not shown) of an aeromechanical conveyor according to the present invention. Fluid inlet conduit 51a is directed toward the periphery of the sprocket and fluid conduit 51b is directed toward the area between the legs of a spider to the centre of the sprocket. The arrangement is suitable for a conveyor where the sprocket lies with its circular face in a substantially horizontal plane. It will be understood that the inlet conduits 51a, 51b may be repositioned for conveyors where the sprocket is positioned in a vertical or inclined plane. The conduits 51a and 51b connect via a connecting conduit 55 with a supply of compressed air.

It will be appreciated that by causing the position of the fluid outlets to move, more areas can be effectively cleaned than was possible with the prior art arrangements. Also, the symmetrical arrangement and location of the air outlets as described permits the embodiment to be equally effective in cleaning the enclosed cavity surrounding a sprocket whether that sprocket and cavity be positioned vertically, horizontally or at any inclined angle. Thus, one standard sprocket part can be provided for use with all types of aero-mechanical conveyor.

It is to be understood that features such as the positioning, size and number of radial channels and air outlets and the type of cleaning fluid to be used as described with reference to the Figures are nor intended to be limiting and other embodiments will no doubt occur to the skilled reader without departing from the scope of the invention as claimed in the appended claims.

## Claims

1. A cleaning system for a particulate material conveyor comprising a sprocket (22) and a cavity (29) surrounding the sprocket;
**characterised in that** the sprocket has one or more radial channels (25a-c) passing therethrough, the radial channel(s) connecting with an inlet (26) for a cleaning fluid supply and each having one or more fluid outlets (27,28) exiting from the surface of the sprocket, such that when the sprocket rotates, fluid provided through the inlet is distributed through the radial channels and out of the fluid outlets and is dispersed in a turbulent manner about the cavity surrounding the sprocket.

2. A cleaning system as claimed in claim 1 wherein the sprocket has a centrally arranged spider (23), each leg of the spider being provided with a radial channel.

3. A cleaning system as claimed in claim 2 wherein each radially channelled leg is provided with a multitude of fluid outlets (27,28) equi-spaced along the spider leg and directed outwards from the front and/or rear circular plane of the sprocket.

4. A cleaning system as claimed in claim 2 or claim 3 wherein at least one fluid outlet is provided with respect to each radial channel which outlet exits to the peripheral edge of the sprocket.

5. A cleaning system as claimed in claim 4 wherein there are at least two outlets exiting to the peripheral edge of the sprocket, each directed at an angle to the axis of the radial channel and each being directed in symmetrically opposing directions to each other.

6. A cleaning system as claimed in claim 5 wherein four outlets are provided, each exiting to the peripheral edge of the sprocket and the four being directed in four symmetrically opposing directions so as to reach a maximum area with the cleaning fluid.

7. A cleaning system as claimed in any preceding claim wherein the fluid inlet comprises a rotary union (40) fitted in a bore (26) in the centre of the sprocket and rotatable therewith.

8. A cleaning system as claimed in any preceding claim wherein the fluid is compressed air.

9. A cleaning system as claimed in any preceding claim wherein the sprocket is cut from a single blank of metal and the radial channels and fluid inlet and outlets are drilled.

10. A cleaning system as claimed in claim 9 wherein the termini of the radial channels at the peripheral edge of the sprocket are plugged.

11. A cleaning system as claimed in any preceding claim wherein the fluid outlets are of smaller diameter than the radial channels thereby providing increased pressure at the outlets for cleaning.

12. A cleaning system as claimed in claim 11 wherein the radial channels are approximately 4.5mm in diameter and the fluid outlets are approximately 1.5mm in diameter.

13. A cleaning system as claimed in any preceding claim wherein the diameter of the radial channels and/or the fluid outlets is varied to provide different levels of pressure at different positions about the sprocket.

14. A cleaning system as claimed in any preceding claim further comprising one or more fluid inlets mounted in fixed position on the housing surrounding the socket.

15. A method for cleaning a particulate material conveyor comprising a sprocket (22) and a cavity (29) surrounding the sprocket, the method comprising;
providing a source of cleaning fluid through a system of fluid conduits exiting inside the conveyor; the method being **characterised in** causing the system of fluid conduits to move with the rotation of the sprocket about the sprocket area so as to distribute the fluid over a greater range of area withing the cavity surrounding the sprocket.

16. A particulate material conveyor comprising;
a continuous tubular assembly through which the particulate material is conveyed via a plurality of spaced apart discs, said discs being mounted on an endless rope which is driven between terminal sprockets through the tubular assembly **characterised in that** one or more of the sprockets (22) has one or more radial channels (25) passing therethrough, the radial channel(s) connecting with an inlet (26) for a cleaning fluid supply and each having one or more fluid outlets (27,28) exiting from the surface of the sprocket, such that when the sprocket rotates, fluid provided through the inlet is distributed through the radial channels and out of the fluid outlets and is dispersed in a turbulent manner about the cavity surrounding the sprocket by the rotation of the sprocket.

## Patentansprüche

1. Reinigungssystem für einen Feststoffpartikel-Förderer mit einem Transportrad (22) und einem das Transportrad umgebenden Hohlraum (29),
**dadurch gekennzeichnet, dass** das Transportrad einen oder mehrere radial hindurchgehende Kanäle (25a-c) aufweist und der radiale Kanal bzw. die radialen Kanäle mit einem Einlass (26) für eine Reinigungsfluidzufuhr verbunden ist und jeder Kanal einen oder mehrere Fluidauslässe (27, 28) aufweist, die an der Oberfläche des Transportrades derart austreten, dass bei Drehung des Transportrades das durch den Einlass zugeführte Fluid über die radialen Kanäle und aus den Fluidauslässen verteilt und in turbulenter Weise über den das Transportrad umgebenden Hohlraum dispergiert wird.

2. Reinigungssystem nach Anspruch 1, bei welchem das Transportrad ein zentral angeordnetes Armkreuz (23) aufweist und jeder Arm des Armkreuzes mit einem radialen Kanal ausgestattet ist.

3. Reinigungssystem nach Anspruch 2, bei welchem jeder mit einem radialen Kanal versehene Arm mit einer Vielzahl von Fluidauslässen (27, 28) versehen ist, die im gleichen Abstand über den Arm des Armkreuzes angeordnet und von der vorderen und/oder rückwärtigen Kreisebene des Transportrades nach außen gerichtet sind.

4. Reinigungssystem nach den Ansprüchen 2 oder 3, bei welchem wenigstens ein Fluidauslass für jeden radialen Kanal vorgesehen ist und der Auslass am Umfangsrand des Transportrades austritt.

5. Reinigungssystem nach Anspruch 4, bei welchem wenigstens zwei Auslässe am Umfangsrand des Transportrades austreten und jeder Auslass unter einem Winkel gegenüber der Achse des Radialkanals und in symmetrisch einander gegenüberliegenden Richtungen angestellt ist.

6. Reinigungssystem nach Anspruch 5, bei welchem vier Auslässe vorgesehen sind und ein jeder nach dem Umfangsrand des Transportrades austritt und die vier Auslässe in vier symmetrisch gegenüberliegenden Richtungen gerichtet sind, so dass ein maximaler Bereich mit dem Reinigungsfluid ausgefüllt wird.

7. Reinigungssystem nach einem der vorhergehenden Ansprüche, bei welchem der Fluideinlass eine Drehverbindung (40) aufweist, die in einer Bohrung (26) in der Mitte des Armkreuzes und mit diesem drehbar angeordnet ist.

8. Reinigungssystem nach einem der vorhergehenden Ansprüche, bei welchem das Fluid komprimierte Luft ist.

9. Reinigungssystem nach einem der vorhergehenden Ansprüche, bei welchem das Transportrad aus einem einzigen Metallrohling ausgeschnitten ist und die radialen Kanäle und der Fluideinlass und die Fluidauslässe eingebohrt sind.

10. Reinigungssystem nach Anspruch 9, bei welchem die Endanschlüsse der radialen Kanäle am Umfangsrand des Transportrades eingesteckt sind.

11. Reinigungssystem nach einem der vorhergehenden Ansprüche, bei welchem die Fluidauslässe einen kleineren Durchmesser besitzen als die radialen Kanäle, wodurch ein erhöhter Druck an den Auslässen zum Zwecke der Reinigung erzielt wird.

12. Reinigungssystem nach Anspruch 11, bei welchem die radialen Kanäle einen Durchmesser von etwa 4,5 mm besitzen und die Fluidauslässe einen Durchmesser von etwa 1,5 mm haben.

13. Reinigungssystem nach einem der vorhergehenden Ansprüche, bei welchem der Durchmesser der radialen Kanäle und/oder der Fluidauslässe veränderbar ist, um unterschiedliche Drücke an unterschiedlichen Stellen über dem Transportrad zu erzielen.

14. Reinigungssystem nach einem der vorhergehenden Ansprüche, bei welchem ein Fluideinlass oder mehrere Fluideinlässe in fester Lage an dem das Transportrad umgebenden Gehäuse angeordnet sind.

15. Verfahren zur Reinigung eines Feststoffpartikel-Förderers, welcher ein Transportrad (22) und einen das Transportrad umgebenden Hohlraum (29) aufweist und das Verfahren die folgenden Schritte umfasst:
es wird eine Quelle eines Reinigungsfluids durch ein System von Fluidleitungen geschickt, die innerhalb des Förderers münden; wobei das Verfahren
**dadurch gekennzeichnet ist, dass** das System von Fluidleitungen veranlasst wird, sich mit der Drehung des Transportrades um den Transportradbereich zu bewegen, um das Fluid über einen größeren Bereich innerhalb des Hohlraumes zu verteilen, der das Transportrad umgibt.

16. Feststoffpartikel-Förderer mit den folgenden Merkmalen:
es ist ein kontinuierlicher rohrförmiger Aufbau vorgesehen, durch den die Feststoffpartikel über mehrere im Abstand zueinander liegende Scheiben zugeführt werden, wobei die Scheiben auf einem endlosen Seil montiert sind, das zwischen Umlenk-Transporträdern durch den rohrförmigen Aufbau angetrieben wird,
**dadurch gekennzeichnet, dass** eines oder mehrere Transporträder (22) einen oder mehrere radial durchgehende Kanäle (25) aufweist, wobei die radialen Kanäle mit einem Einlass (26) für eine Reinigungsfluidquelle verbunden sind und jeder Einlass mit einem oder mehreren Fluidauslässen (27, 28) versehen ist, die von der Oberfläche des Transportrades derart austreten, dass dann, wenn sich das Transportrad dreht, das Fluid durch den Einlass über die radialen Kanäle und aus den Fluidauslässen verteilt und durch die Drehung des Transportrades in turbulenter Weise über den Hohlraum, der das Transportrad umgibt, dispergiert wird.

## Revendications

1. Système de nettoyage pour un transporteur de matières particulaires comprenant une dent de pignon à chaîne (22) et une cavité (29) entourant la dent de pignon à chaîne, **caractérisé en ce que** la dent de pignon à chaîne possède un ou plusieurs canaux radiaux (25 a-d) qui la traversent, le(s) canal/canaux radial/radiaux étant raccordés à une entrée (26) pour une amenée de fluide de nettoyage et possédant chacun une ou plusieurs sorties de fluide (27, 28) sortant par la surface de la dent de pignon à chaîne, de sorte que lorsque la dent de pignon à chaîne tourne, le fluide fourni par l'intermédiaire de l'entrée est distribué via les canaux radiaux et en sortant par les sorties de fluide, et est dispersé de manière turbulente dans la cavité qui entoure la dent de pignon à chaîne.

2. Système de nettoyage selon la revendication 1, dans lequel la dent de pignon à chaîne possède un croisillon (28) disposé de manière centrale, chaque branche du croisillon étant pourvue d'un canal radial.

3. Système de nettoyage selon la revendication 2, dans lequel chaque branche à canal radial est pourvue d'une multitude de sorties de fluide (27, 28) à égale distance le long de la branche du croisillon et tournées vers l'extérieur du plan circulaire avant et/ou arrière de la dent de pignon à chaîne.

4. Système de nettoyage selon l'une quelconque des revendications 2 ou 3, dans lequel au moins une sortie de fluide est fournie compte tenu de chaque canal radial, laquelle sortie débouche vers le bord périphérique de la dent de pignon à chaîne.

5. Système de nettoyage selon la revendication 4, dans lequel il y a au moins deux sorties débouchant vers le bord périphérique de la dent de pignon à chaîne, chacune étant tournée vers un angle par rapport à l'axe du canal radial, et chacune étant tournée dans des directions symétriquement opposées l'une par rapport à l'autre.

6. Système de nettoyage selon la revendication 5, dans lequel quatre sorties sont fournies, chacune débouchant vers le bord périphérique de la dent de pignon à chaîne, et les quatre étant tournées dans quatre directions symétriquement opposées afin d'atteindre une zone maximale avec le fluide de nettoyage.

7. Système de nettoyage selon l'une quelconque des revendications précédentes, dans lequel l'entrée de fluide comprend une union rotative (40) insérée dans un alésage (26) au centre de la dent de pignon à chaîne et pouvant tourner avec elle.

8. Système de nettoyage selon l'une quelconque des revendications précédentes, dans lequel le fluide est de l'air comprimé.

9. Système de nettoyage selon l'une quelconque des revendications précédentes, dans lequel la dent de pignon à chaîne est découpée à partir d'une seule pièce découpée en métal, et dans lequel les canaux radiaux et l'entrée et les sortie de fluide sont percées.

10. Système de nettoyage selon la revendication 9, dans lequel des terminus des canaux radiaux sur le bord périphérique de la dent de pignon à chaîne sont obturés.

11. Système de nettoyage selon l'une quelconque des revendications précédentes, dans lequel les sorties de fluide sont d'un diamètre inférieur à celui des canaux radiaux et fournissent ainsi une pression plus importante au niveau des sorties pour le nettoyage.

12. Système de nettoyage selon la revendication 11, dans lequel les canaux radiaux présentent un diamètre d'environ 4,5 mm, et dans lequel les sorties de fluide présentent un diamètre d'environ 1,5 mm.

13. Système de nettoyage selon l'une quelconque des revendications précédentes, dans lequel le diamètre des canaux radiaux et/ou des sorties de fluide change pour fournir différents niveaux de pression en différentes positions sur la dent de pignon à chaîne.

14. Système de nettoyage selon l'une quelconque des revendications précédentes, comprenant par ailleurs une ou plusieurs entrées de fluide montées dans une position fixe sur le châssis qui entoure la dent de pignon à chaîne.

15. Méthode de nettoyage d'un transporteur de matières particulaires comprenant une dent de pignon à chaîne (22) et une cavité (29) entourant la dent de pignon à chaîne, la méthode comprenant : la fourniture d'une source de fluide de nettoyage via un système de canalisations de fluide débouchant à l'intérieur du transporteur, la méthode étant **caractérisée en ce qu'**elle fait bouger le système à canalisations de fluide avec la rotation de la dent de pignon à chaîne au niveau de la zone de la dent de pignon à chaîne de manière à distribuer le fluide sur une plus grande étendue de zone à l'intérieur de la cavité qui entoure la dent de pignon à chaîne.

16. Transporteur de matières particulaires comprenant :
un assemblage tubulaire continu via lequel les matières particulaires sont transportées via une pluralité de disques espacés, lesdits disques étant montés sur un câble sans fin qui est entraîné entre des dents de pignon à chaîne terminales via l'assemblage tubulaire, **caractérisé en ce que** une ou plusieurs dents de pignon à chaîne (22) possèdent un ou plusieurs canaux radiaux (25) qui les traversent, le(s) canal/canaux radial/radiaux étant raccordé(s) à une entrée (25) pour une amenée de fluide de nettoyage, et ayant chacun une ou plusieurs sorties de fluide (27, 28) sortant à la surface de la dent de pignon à chaîne, de sorte que lorsque la dent de pignon à chaîne tourne, le fluide fourni par l'intermédiaire de l'entrée est distribué à travers les canaux radiaux et en sortant par les sorties de fluide, et est dispersé de manière turbulente dans la cavité qui entoure le dent de pignon à chaîne grâce à la rotation de la dent de pignon à chaîne.
